# EUROPEAN PATENT APPLICATION

(11) **EP 2 800 438 A1**
(43) Date of publication of application: **05.11.2014**
(21) Application number: 13166377.5
(22) Date of filing: 03.05.2013
(51) Int. Cl.: H04W 72/08, H04B 17/00, H04B 7/02, H04W 24/10, H04L 5/00

(54) **Out-of-group interference measurement in wireless communication system**

(71) Applicant: FUJITSU LIMITED, Kawasaki-shi, Kanagawa 211-8588 (JP)
(72) Inventor: Fang, Yiwei, Hayes, Middlesex UB4 8FE (GB); Moulsley, Timothy, Caterham, Surrey CXR3 5EE (GB)
(74) Representative: Stebbing, Timothy Charles

(57) **Abstract**

An interference measurement technique in the LTE downlink based on coordinated CSI-RS patterns among multiple cells/eNBs operating in a coordinated group. This coordinated CSI-RS enables a terminal to measure the interference arising from cells outside of the cooperating group (OGI). However, in scenarios of interest the time synchronization among the cells is likely to be non-perfect due to latency in the backhaul network, which makes the measurement of OGI likely to be corrupted by in-group transmission. To overcome this, the terminal is instructed to carry out individual measurements on two adjacent muted CSI-RS. Provided the maximum spread of timing misalignment among the imperfectly synchronized cells interfering with OGI measurement is no more than one OFDM symbol, a clean result of OGI can then be extracted from the two measurements.

## Description

### Field of the Invention

The present invention relates to wireless communication systems, for example systems based on the 3GPP Long Term Evolution (LTE) and LTE-Advanced (LTE-A) groups of standards, as well as IEEE 802.16 WiMAX systems, which may allow coordinated downlink transmission from at least one cell in a co-operating group of cells, to a given mobile terminal.

### Background of the Invention

Wireless communication systems are widely known in which base stations (BSs) communicate with user equipments (UEs) (also called terminals, subscriber or mobile stations) within range of the BSs.

The geographical area covered by a base station is generally referred to as a cell, and conventionally many BSs are provided in appropriate locations so as to form a network covering a wide geographical area more or less seamlessly with adjacent and/or overlapping cells, also called "macro cells" below. In more advanced systems, the concept of a cell can also be used in a different way: for example to define a set of radio resources (such as a given bandwidth around a carrier centre frequency), with an associated identity which may be used to distinguish one cell from another. The cell identity can be used for example in determining some of the transmission properties of communication channels associated with the cell, such as using scrambling codes, spreading codes and hopping sequences. A cell may also be associated with one or more reference signals (see below), which are intended to provide amplitude and/or phase reference(s) for receiving one or more communication channels associated with the cell. Therefore, it is possible to refer to communication channels associated with a cell being transmitted from or by the cell (in the downlink), or transmitted to a cell (in the uplink), even if the transmission or reception is actually carried out by a base station. Typically, a downlink cell is linked or associated with a corresponding uplink cell. However, it should be noted that it would in principle be possible to organise a communication system which may have cell-like features without explicit cells being defined. For example, an explicit cell identity may not be needed in all cases. Incidentally, references to "cells" henceforth implicitly include the base station(s) responsible for those cells, unless the context demands otherwise. The term "cell" is also intended to include a "transmission point" unless the context demands otherwise.

Each BS divides its available time and frequency resources in a given cell, into individual resource allocations for the user equipments which it serves. The user equipments are generally mobile and therefore may move among the cells, prompting a need for handovers of radio communication links between adjacent cells. A user equipment may be in range of (i.e. able to detect signals from) several cells at the same time, but in the simplest case it communicates with one "serving" cell. The serving cell may be one of a co-operating group of cells in a given geographical area, as explained later.

Modern wireless communication systems such as LTE and LTE-A are hugely complex and a full description of their operation is beyond the scope of this specification. However, for assisting understanding of the inventive concepts to be described later, some outline will be given of some of the features of LTE which are of particular relevance in the present invention. As an aside, references herein to LTE are taken to include later versions of LTE, such as LTE-A, where not specifically excluded. In terms of the numbering used by 3GPP, 3GPP Release 8 and 9 relate to LTE, and Release 10 onwards to LTE-A.

### OFDM and OFDMA

OFDM (Orthogonal Frequency Division Multiplexing) is one known technique for transmitting data in a wireless communication system. An OFDM-based communications scheme divides data symbols to be transmitted among a large number of subcarriers, hence the term frequency division multiplexing. Data is modulated onto a subcarrier by adjusting its phase, amplitude, or both phase and amplitude. The "orthogonal" part of the name OFDM refers to the fact that the spacings of the subcarriers in the frequency domain are specially chosen so as to be orthogonal, in a mathematical sense, to the other subcarriers. In other words, they are arranged along the frequency axis such that the sidebands of adjacent subcarriers are allowed to overlap but can still be received without inter-subcarrier interference. As the user equipments will receive the same signals at slightly different timings, in other words with a certain delay spread, each OFDM symbol is preceded by a cyclic prefix, which is used to effectively eliminate intersymbol interference.

When individual subcarriers or sets of subcarriers are assigned to different user equipments, the result is a multi-access system referred to as OFDMA (Orthogonal Frequency Division Multiple Access), as used in LTE, LTE-A and WiMAX for the downlink - in other words for communication from base stations to user equipments. By assigning distinct frequency/time resources to each user equipment in a cell, OFDMA can substantially avoid interference among the users served within a given cell.

### Frame Structure and Resource Blocks

In a wireless communication system such as LTE/LTE-A or WiMAX, data for transmission on the downlink is organised in OFDMA frames each divided into a number of sub-frames. Generally, two different duplex modes are provided for separating the downlink and the uplink: frequency division duplex (FDD) and time division duplex (TDD). In FDD, the downlink and uplink are transmitted at the same time but on different frequencies. In TDD, the uplink and downlink are on the same frequencies and therefore are separated in the time domain. Frames follow successively one immediately after the other, and each is given a system frame number (SFN).

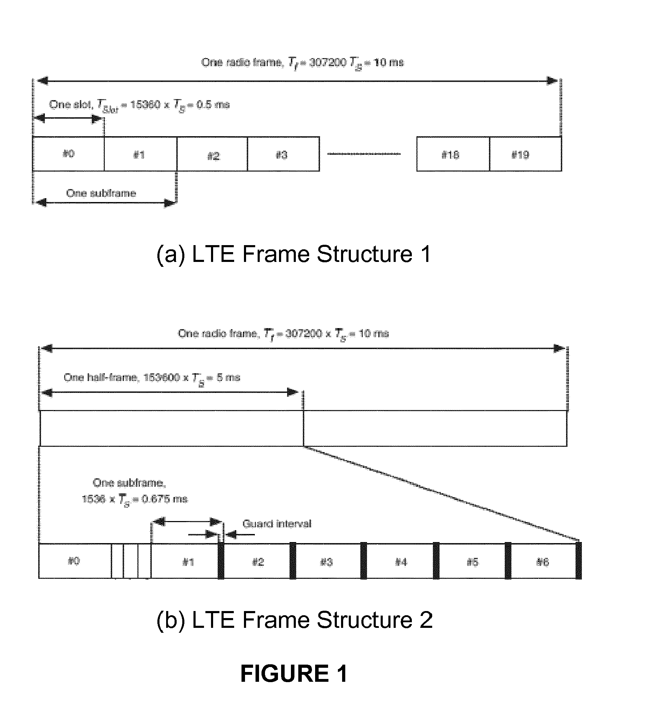

Various frame types are possible and differ between FDD and TDD. Figure 1 shows frame structures for LTE: the upper part (a) of the Figure shows a so-called Frame Structure 1 which is intended for FDD, in which the 10 ms frame is divided into 20 equally sized slots of 0.5 ms, all of which may be used for the downlink (a similar frame structure is used for the uplink, separated in frequency). A sub-frame SF consists of two consecutive slots, so one radio frame contains 10 sub-frames. The lower part (b) of Figure 1 shows a Frame Structure 2 which is provided for TDD. In this instance the subframes are allocated either to downlink or uplink; in other words, a configuration of subframes is chosen in dependence upon the relative amounts of DL and UL traffic, with one or more switch points where transmission switches between DL and UL.

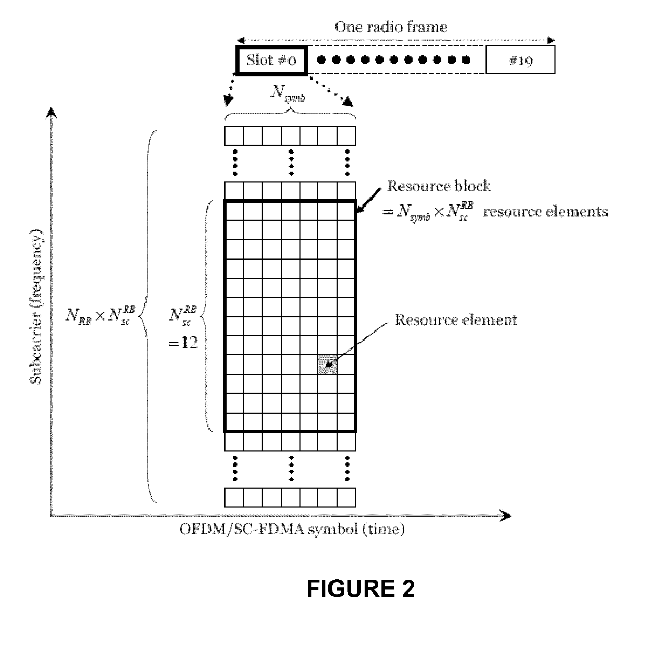

Figure 2 shows a so-called downlink resource grid for the duration of one downlink slot. One downlink slot consists of Nsymb OFDM symbols in general; for example (as in the example shown) Nsymb = 7. The transmitted signal in each slot is described by a resource grid of sub-carriers and available OFDM symbols, as shown in Figure 2. Each element in the resource grid is called a resource element (RE) and each resource element corresponds to one symbol and one subcarrier.

OFDMA allows access by multiple UEs to the available bandwidth as already mentioned. Each UE is assigned a specific time-frequency resource. The data channels are shared channels, i.e. for each transmission time interval of 1 ms, a new scheduling decision is taken regarding which UEs are assigned to which time/frequency resources during this transmission time interval. The basic scheduling unit for allocation of resources to the UEs is called a resource block (RB). As shown in Figure 2, one resource block is defined as typically 7 consecutive OFDM symbols in the time domain and 12 consecutive sub-carriers in the frequency domain (and thus, 84 REs). The resource block size is the same for all system bandwidths, therefore the number of available physical resource blocks depends on the bandwidth.

Several resource blocks may be allocated to the same UE, and these resource blocks do not have to be adjacent to each other. Scheduling decisions are taken at the base station (eNodeB in LTE terminology). The scheduling algorithm has to take into account the radio link quality situation of different UEs, the overall interference situation, Quality of Service requirements, service priorities, etc.

### Channels

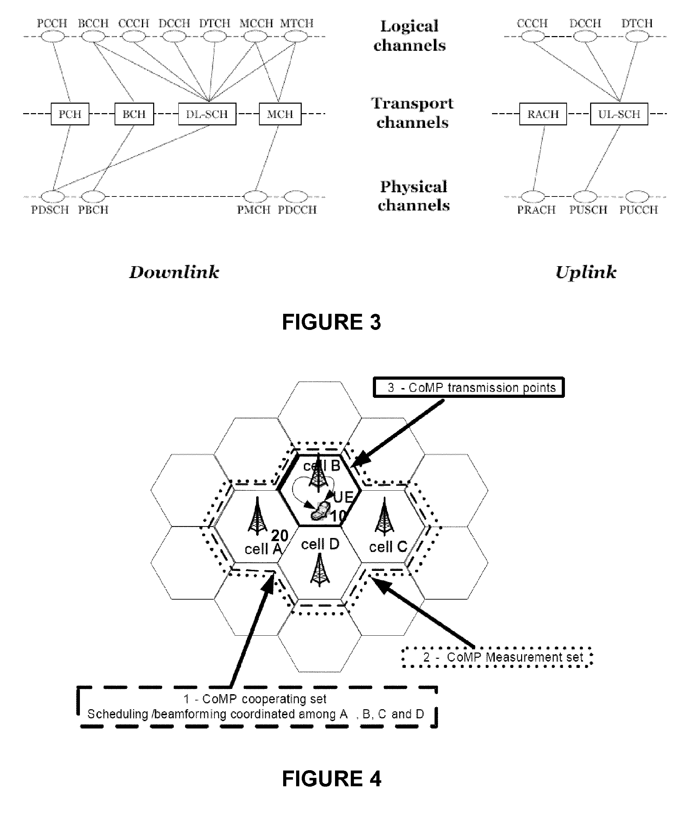

Several channels for data and control signalling are defined at various levels of abstraction within the network. Figure 3 shows some of the channels defined in LTE at each of a logical level, transport layer level and physical layer level, and the mappings between them.

On the downlink, user data as well as various reference signals (see below) are carried on the Physical Downlink Shared Channel (PDSCH). There are various control channels on the downlink, which carry signalling for various purposes including so-called Radio Resource Control (RRC), a protocol used as part of the above-mentioned RRM. In particular the Physical Downlink Control Channel (PDCCH), Physical Broadcast Channel (PBCH) and Physical Multicast Channel (PMCH) are provided. PDCCH is used to carry scheduling information - called downlink control information, DCI - from the base stations to individual UEs.

Meanwhile, on the uplink, user data and also some signalling data is carried on the Physical Uplink Shared Channel (PUSCH), and control channels include a Physical Uplink Control Channel, PUCCH, used to carry signalling from UEs including channel quality indication (CQI) reports, precoding matrix information (PMI), a rank indication (RI) for MIMO (see below), and scheduling requests.

### Reference Signals

To facilitate measurements of the radio link properties by UEs, and reception of some transmission channels, reference signals are embedded in the downlink sub-frame as transmitted from each antenna of an eNodeB or more accurately for LTE/LTE-A, "antenna port". The term "antenna port" is sometimes preferred when referring to transmissions from multiple antennas, since it is possible for multiple physical antennas to jointly transmit a given signal and thus act as a single antenna port. A given set of physical antennas may also support more than one antenna port. Each base station may comprise a plurality of antenna ports, and may provide one or more cells. Consequently the antenna ports have a relationship with the cells; for example in one possible relationship, one or more antenna ports are associated with a given cell.

The reference signals associated with each antenna port provide an amplitude and/or phase reference for allowing the UEs to correctly decode the remainder of the downlink transmission. In LTE reference signals can be classified into a cell-specific (or common) reference signal (CRS), a Multicast-Broadcast Single Frequency Network (MBSFN) reference signal used in Multimedia Broadcast Multicast Service (MBMS), and a user equipment-specific reference signal (UE-specific RS). There are also positioning reference signals, and the UE-specific reference signals are also commonly termed demodulation reference signals, DM-RS.

In the case of two transmit antenna ports in LTE, therefore, reference signals are transmitted from each CRS antenna port. The reference signals on the second antenna port are offset in the frequency domain by three sub-carriers, from those on the first antenna port and to allow the UEs to accurately measure the radio link properties, nothing is transmitted on the other antenna port at the same time-frequency location of reference signals.

LTE-A introduces further reference signals including a UE-specific Channel State Information Reference Signal CSI-RS (see below).

### MIMO and CoMP

A technique called MIMO, where MIMO stands for multiple-input multiple-output, has been adopted in LTE due to its spectral efficiency gain, spatial diversity gain and antenna gain. MIMO schemes employ multiple antennae at the transmitter and/or at the receiver to enhance the data capacity achievable between the transmitter and the receiver. By way of example, in a basic 2x2 MIMO configuration there are two antennae at the transmitter and two antennae at the receiver. There is no need for the transmitter and receiver to employ the same number of antennas. Typically, a base station will be equipped with more antennas in comparison with a UE (which may often be, for example, a mobile handset), owing to differences in power, cost and size limitations.

It is possible to coordinate the MIMO transmissions among multiple antennas (or antenna ports) belonging to the same base station (i.e. coordinating transmissions within a single cell) or among multiple base stations (i.e. coordinating transmissions in adjacent or nearby cells) to reduce inter-cell interference and improve the data rate to a given UE. This is called coordinated multi-point transmission/reception or CoMP. Of particular relevance to the invention to be described, one downlink scheme used in CoMP is "Coordinated Scheduling and/or Coordinated Beamforming (CS/CB)" as illustrated in Figure 4.

In CS/CB, data to a single UE is transmitted from one cell (or transmission point), but decisions regarding user scheduling (i.e. the scheduling of timings for transmissions to respective UEs) and/or beamforming decisions are made with coordination among the co-operating cells. In other words, scheduling/beamforming decisions are made with coordination between the cells participating in the coordinated scheme so as to prevent, as far as possible, a single UE from receiving signals from more than one cell. Thus, in coordinated scheduling, each UE is served by a single cell but one cell may reduce its transmission power on a set of time-frequency resources for the benefit of UEs in a second cell. Incidentally, the term "coordinated scheduling" is used henceforth also to denote coordinated beamforming and cell selection.

As shown in Figure 4, there is a co-operating group (or set) cells A, B, C and D as outlined by the dashed line and labelled at "1 - CoMP co-operating set". For illustrative purposes only, each cell is provided by a respective base station 20. In this example, the same set of cells forms a CoMP measurement set (outlined by the dotted line, labelled "2 - CoMP measurement set"), on which a UE 10 may make measurement reports. However, as indicated by the solid line labelled "3 - CoMP transmission points", only cell B actively transmits data to the UE, while the user scheduling/beamforming decisions are made with coordination among cells A, B, C and D of the CoMP co-operating set so that the co-channel inter-cell interference among the co-operating cells can be reduced or eliminated.

Various modes of MIMO transmission are possible. LTE defines several "Transmission Modes" (TMs) with Release-11 adding a new TM10 for CoMP, which defines channel quality reporting for multiple non-zero-power CSI-RS (see below), and in which an interference measurement for each of the CSI reports is obtained from a defined zero-power CSI-RS.

In MIMO scenarios, the UE will be expected to provide feedback to the network regarding how its transmissions should be formed in terms of, e.g., number of spatial layers, i.e. rank (RI), precoding (PMI) and modulation and coding scheme (CQI). In the case of a coordinated multipoint (CoMP)-enabled network, this feedback information could be derived as a function of some, or all, of the channels between the multiple transmission points in the co-operating group of cells and the UE (as indicated by the CoMP measurement set in Figure 4), compared to the simple case of having only one transmission point and one associated channel to the UE.

### Heterogeneous and Small-Cell Networks

Figure 4 shows CoMP being performed by cells of equal size, such as macro cells. Conventionally, a wireless cellular network is a homogeneous network providing a patchwork of wide-area or macro cells which, though they may vary in shape and size and overlap to a degree, each serve a distinct geographical area and have a similar status.

However, recently there is much attention being paid to so-called heterogeneous networks in which there are layers cells of different sizes including, in addition to conventional macro cells, so-called "small cells" comprising femto, pico and/or micro cells, the small cells located completely within the macro cells. The general motivation for such heterogeneous networks is to improve capacity of the macro cell network by providing hotspots within the macro cells. To maximise the capacity gains capable of being realised, it is important for the macro and small cells to co-operate, or in other words to form a co-operating group of cells with respect to one UEs or a set of UEs. Thus, generally small cells employ licensed spectrum and are managed by an operator of the macro cells.

In the case of LTE, femto cells are provided by a miniaturised base station called a Home eNodeB (HeNB) which is expected to find widespread use in homes and offices, linked to the core LTE network via broadband Internet. The term eNodeB henceforth includes HeNB unless the context demands otherwise.

In both CoMP and Small Cell scenarios, the UE will be expected to provide feedback to the network regarding how its transmission would be formed in terms of, e.g., transmission rank (RI), precoding (PMI) and modulation and data rate/coding scheme (CQI). This feedback information could be derived for some, or all, of the channels between the multiple transmission points in the co-operating group of cells and the UE. Advanced CoMP schemes may also perform better if some more explicit information regarding the radio channel is available. CoMP performance may be improved by using measurements not only the channels within the co-operating group, but by also providing to the network some feedback regarding interference being received from outside the co-operating group - here termed 'out-of-group interference' (OGI). The network performance from coordinated scheduling can also be improved with the knowledge of OGI, as time-frequency resources that are least affected by OGI can be preferentially scheduled for transmission.

In the (Release 10) LTE-A specifications, the above mentioned CSI-RS are introduced which are defined for 1, 2, 4 or 8 antenna ports of a cell and which have a much lower density in time and frequency than the Common Reference Symbols (CRS), and a hence much lower overhead. Their purpose is to allow improved estimation of the channel for feeding back RI/PMI/CQI and possibly other related parameters to the network. CSI-RS can thus be viewed as LTE-A's solution to channel estimation and feedback for high-rate PDSCH (downlink data transmission) scenarios. CSI-RS patterns in time and frequency can be configured by higher layers to allow considerable flexibility over which resource elements (REs) contain them.

Furthermore, to support CoMP operation, a LTE Release 11 UE can be configured with multiple CSI-RS patterns specific to its cell:
- Up to three configurations for which the UE shall assume non-zero transmission power for the CSI-RS; these are referred to below as "non-zero-power" CSI-RS; and
- Zero or more configurations for which the UE shall assume zero transmission power for the CSI-RS. These are referred to henceforth as "zero-power" or "muted" CSI-RS (the terms "muted CSI-RS" and "zero-power CSI-RS" are used interchangeably from now on).

A RE configured as a zero-power CSI-RS with respect to a serving cell can be assumed by the UE to be empty (free of DL transmission from the serving cell). In this way, the transmissions on channels in a co-operating group can be measured without interference from the serving cell.

The purpose of the zero power CSI-RS is to ensure that resources so-configured can be assumed by the UE to not to contain CSI-RS on which the UE should make channel measurements (corresponding to the cells it is co-operating with in a CoMP scenario). That is, it is indicated to the UEs that the cell does not transmit any signal on a RE that is designated for a zero-power CSI-RS (and consequently that the RE is not to be used for data, in other words will be excluded from inclusion in PDSCH). In such a RE, the UE will not be able to make channel measurements but may take other actions as normal.

In addition, zero-power CSI-RS can also be configured as interference measurement resources on which the UE should make measurements to assess the interference level. It will be understood that in this case, the measurement is not of any signal from the serving cell, but rather of noise/interference due to other cells. In the case of a co-operating group, this noise/interference would be produced by "out-of-group" cells (OGI).

Although CoMP is not directly supported by the LTE Release 10 specifications, knowledge of the presence of zero power CSI-RS patterns can be used by a Release 10 UE to mitigate the possible impact of CoMP on data transmissions using PDSCH. That is, knowing the locations of CSI-RS can avoid the UE trying to decode them as data in PDSCH, and allows adjacent REs (which may contain PDSCH) to be decoded correctly.

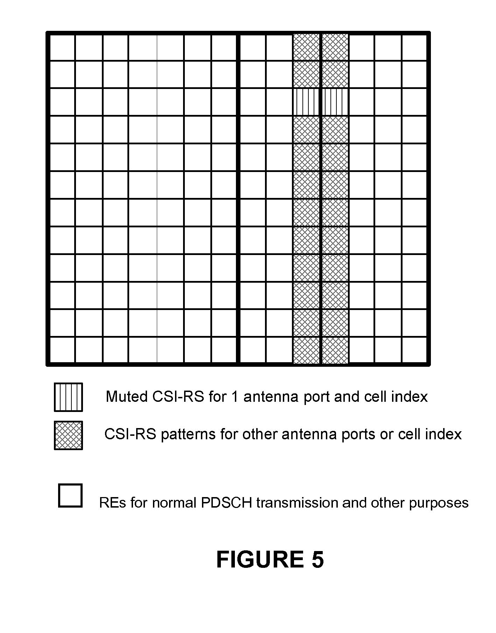

Figure 5 shows one possible CSI-RS configuration based on an RB pair, which is formed by two adjacent resource blocks each as shown in Figure 2. Ordinarily the first RB of the pair does not contain the CSI-RS (since the first RB is assumed to be too congested with other reference signals). In this example, which is applicable to LTE Frame Structure 2, the CSI-RS are contained in specific symbols one RE apart. The cross-hatched squares represent REs occupied by "normal" CSI-RS. The squares marked with vertical lines represent zero-power CSI-RS. In LTE the CSI-RS with non-zero power corresponding to a single CSI-RS antenna port are transmitted in a pair of REs in a given RB. This allows higher power than if only one RE is used. Alternatively, the CSI-RS for two ports can be transmitted in two REs, and distinguished by the use of orthogonal sequences. If a pair of REs is configured as zero-power CSI-RS (e.g. for interference measurement) then there is no particular associated port or sequence.

With use of the above configuration possibilities provided in Release 11, it has been proposed to coordinate resource use and reference signal patterns among the several cells and/or eNodeBs operating in a coordinated multipoint (CoMP) group, so that a UE is able to measure the interference arising from outside of the CoMP group without these measurements being disturbed by transmissions from within the group. Hitherto, however, it has been assumed that transmissions from the co-operating cells in a CoMP network are perfectly time-aligned.

### Summary of the Invention

According to a first aspect of the present invention, there is provided a method for measuring out-of-group interference, OGI, in a wireless communications system providing a co-operating group of cells which coordinate their transmissions with respect to one or more terminals, transmissions in the system being scheduled in units of resource elements, REs, where each RE has a defined location in time and frequency, and in units of resource blocks, RBs, each containing multiple REs, the method comprising:
configuring a terminal with locations of a plurality of REs within the same RB that it should assume to be have muted transmissions from at least one of the co-operating group of cells; and
configuring the said terminal to make at least one interference measurement on each of more than one adjacent REs among said plurality of REs.

The more than one adjacent REs are, for example, a predetermined pair of REs.

Normally the configuration and measurement will be repeated with respect to multiple RBs across the system bandwidth. The results of measurements from multiple RBs may be combined.

Preferably, but as explained below not necessarily, the REs which are to be muted contain zero transmission power from the at least one of the co-operating group of cells.

In embodiments, all the cells in the co-operating group of cells mute their transmissions within the muted REs. In other embodiments, depending on distance/power of certain cells with respect to the UE, it may not be necessary for all cell in the co-operating group to mute their transmissions.

Normally the terminal makes one measurement on each of the more than one adjacent REs. Thus, in the case of a predetermined pair of adjacent REs, the terminal makes two measurements.

As a further step, the terminal may transmit at least one report based on the interference measurements. Such a report may be indicative of results of each measurement (allowing the network, e.g. a base station to analyse the measurements); or it may indicate a result of analysis by the terminal of the interference measurements.

Preferably, the present invention is applied to time misalignments among the co-operating group of cells. In this case the more than one adjacent REs are consecutive in time and located at the same frequency (on the same subcarrier in other words).

Alternatively the method can be applied to frequency misalignments among cells, in which case the more than one adjacent REs are located at adjacent frequencies and occur at the same time (in other words, on the same symbol within the RB).

In any case, preferably, the co-operating group of cells is arranged for co-ordinated scheduling with transmission to the terminal by one serving cell among the group.

A preferred embodiment is applied to a LTE-A wireless communication system, the more than one adjacent REs constituting muted CSI-RS for the terminal.

According to a second aspect of the present invention, there is provided a wireless communication system comprising:
a terminal; and
one or more base stations providing a co-operating group of cells which coordinate their transmissions with respect to the terminal, transmissions in the system being scheduled in units of resource elements, REs, the REs having defined locations in time and frequency, and in units of resource blocks, RBs, each containing multiple REs; wherein
the one or more base stations and terminal are configured with locations of a plurality of REs within the same RB which are to have muted transmissions from at least one of the co-operating group of cells; and
the terminal is arranged to make at least one interference measurement on each of more than one adjacent REs among said plurality of REs.

According to a third aspect of the present invention, there is provided a base station for use in a wireless communication system to provide one or more cells of a co-operating group of cells which coordinate their transmissions with respect to a terminal, transmissions in the system being scheduled in units of resource elements, REs, where the REs have defined locations in time and frequency, and in units of resource blocks, RBs, each containing multiple REs; wherein
the base station is configured with locations of a plurality of REs within the same RB which are to have muted transmissions from at least one of the co-operating group of cells; and
the base station is arranged to instruct the terminal to make at least one interference measurement on each of more than one adjacent REs among said plurality of REs.

According to a fourth aspect of the present invention, there is provided a terminal for use in a wireless communication system comprising, in addition to the terminal, one or more base stations providing a co-operating group of cells which coordinate their transmissions with respect to the terminal, transmissions in the system being scheduled in units of resource elements, REs, where the REs have defined locations in time and frequency, and in units of resource blocks, RBs, each containing multiple REs; wherein
the terminal is configured with locations of a plurality of REs within the same RB which athe terminal should assume to have muted transmissions from at least one of the co-operating group of cells; and
the terminal is arranged to make at least one interference measurement on each of more than one adjacent REs among said plurality of REs.

As mentioned in the introduction, the term "cell" in this specification is to be interpreted broadly. For example, it is possible to refer to communication channels associated with a cell being transmitted from or by the cell (in the downlink), or transmitted to a cell (in the uplink), even if the transmission or reception is actually carried out by one or more antennas or antenna ports of a base station. The term "cell" is intended also to include sub-cells, which could be sub-divisions of a cell based on using particular antennas or corresponding to different geographical areas within a cell. The cells may be associated with different base stations or with the same base station, and/or may correspond to transmission points. The term "base station" itself has a broad meaning and encompasses, for example, an access point or transmission point.

Reference herein to "muted transmissions" includes reference to downlink transmission reduced or even entirely eliminated from some or all of the co-operating group of cells. In preferred invention embodiments, the downlink transmission in the muted transmission resources may be muted by a reduction of transmission power and/or by disallowing some or all transmission. For example, certain types of transmission may be disallowed (such as data transmission and/or certain types of control information transmission). Alternatively or additionally the power of the signals transmitted may be reduced, for example to below a certain threshold.

A co-operating group of cells may be all within the control of a single eNodeB, in which case the eNodeB can carry out the coordination function. In other arrangements, the cells can be controlled by more than one eNodeB. In this situation, invention embodiments provide for coordination between the eNodeBs controlling the co-operating cells. Such coordination would normally be over the X2 interface. In one embodiment, the in-group cells are provided by more than one eNodeB; and the eNodeBs providing the in-group cells exchange signalling to control the in-group co-operation, preferably in the form of one or more patterns of (group-wide) muted transmission resources and/or one or more patterns of reference signal resources. The serving eNodeB/cell may also signal CSI-RS patterns to the UE, along with any supplemental information required to assess OGI.

For example, the eNodeB wishing to enable OGI measurement in its cells may send an indication to each eNodeB within the co-operating group, receive one or more proposed patterns and/or other information from each eNodeB, derive a suitable pattern for use in all the co-operating cells, inform the co-operating eNodeBs of the pattern and then signal this or a pattern suitable derived from it (for example by RRC) to the UE required to make OGI measurements, together with any other information required. Of course the other eNodeBs may not co-operate at one or more stages of this procedure, in which case they could simply be considered not to be part of the co-operating group, at least for the purposes of the UE feedback.

Computer program aspects of the invention relate to software (one or more computer programs) which when executed by one or more processors of radio-transceiver-equipped information processing apparatus in a communications network, cause the apparatus to carry out the method described above. The software may be provided on a non-transitory computer-readable medium which can be viewed as an article of manufacture.

Thus, in summary, embodiments of the present invention provide a measurement technique in the LTE downlink based on coordinated CSI-RS patterns among multiple cells/eNBs operating in a coordinated group. This coordinated CSI-RS enables a UE to measure the interference arising from cells outside of the cooperating group (OGI). However, in scenarios of interest the time synchronization among the cells is likely to be non-perfect due to latency in the backhaul network, which makes the measurement of OGI likely to be corrupted by in-group transmission. According to the invention a terminal can be instructed to carry out individual measurements on two adjacent muted CSI-RS. Hitherto, although two adjacent zero-power CSI-RS may be configured in existing LTE specifications, a terminal would be expected to make only one measurement. Provided the maximum spread of timing misalignment among the imperfectly synchronized cells interfering with OGI measurement is no more than one OFDM symbol, a clean result of OGI can then be extracted from the two measurements.

Incidentally, although normally a terminal would make only one measurement for a specific RE (thus nominally covering the whole duration of one symbol), if a UE is able to make measurements with a finer time-granularity than this, more than one measurement could be made on each of the adjacent REs configured for zero-power CSI-RS.

This proposed measurement technique provides the UEs with the ability to obtain clean measurement of the OGI under the impact of one non-ideally time synchronized cell/eNB in a cooperating group, which would otherwise be disturbed by the misalignment. The proposed solution maximizes spectrum efficiency and system throughput by not requiring configuration of any additional muted data REs but only uses the muted CSI-RS pattern currently specified in LTE. The obtained OGI measurement result, which is resistant to timing errors within the cooperating group, will benefit the cooperation by improving the accuracy of channel state feedback and hence increasing the system data rate, saving energy and enhancing user experience, as a result of properly mitigating impact of the OGI by scheduling transmission resources according to the measurement.

Thus, embodiments of the present invention involve LTE downlink coordination of CSI-RS (Channel State Information - Reference Symbol) patterns among the several cells and/or eNodeBs operating in a coordinated group, as well as the corresponding measurement schemes on these coordinated CSI-RS patterns. This coordination enables a UE to measure the interference arising from cells outside of the co-operating group (OGI), without being disturbed by the transmissions within the group, even under the condition where the time synchronization among the cells/eNodeBs is not ideal.

Setting up coordination of scheduling among cells or eNodeBs is a state-of-the-art performance enhancing technique for "Small Cells" and Coordinated Multi-Point (CoMP) scenarios in LTE. Within such a co-operation group, there are various techniques that can be taken to improve performance. However, one important requirement satisfied by the current invention is to enable more accurate measurement of the interference arising from out of the group, which is normally not within control of the co-operating group. This proposal provides for a measurement technique of the OGI, which would be resistant to the likely non-ideal synchronization among the cells/eNodeBs, and lead to more accurate assessment and feedback of the channel quality/data rate. This invention is therefore expected to improve the system throughput, provide energy savings and enhance the user experience for mobile customers.

In general, and unless there is a clear intention to the contrary, features described with respect to one aspect of the invention may be applied equally and in any combination to any other aspect, even if such a combination is not explicitly mentioned or described herein.

As is evident from the foregoing, many embodiments of the present invention involves signal transmissions between cells and terminals (UEs) in a wireless communication system. The cells are associated with one or more base stations. A base station may take any form suitable for transmitting and receiving such signals. It is envisaged that the base stations will typically take the form proposed for implementation in the 3GPP LTE and 3GPP LTE-A groups of standards, and may therefore be described as an eNodeB (eNB) (which term also embraces Home eNodeB, HeNB, also called femtocell) as appropriate in different situations. However, subject to the functional requirements of the invention, some or all base stations may take any other form suitable for transmitting and receiving signals from terminals.

Similarly, in the present invention, each terminal or UE may take any form suitable for transmitting and receiving signals from base stations. For example, the terminal may take the form of a subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation whatsoever is to be implied from this.

### Brief Description of the Drawings

Reference is made, by way of example only, to the accompanying drawings in which:
Figure 1 illustrates frame structures employed in an LTE wireless communication system,
showing (a) a Frame Structure 1 for FDD and (b) a Frame Structure 2 for TDD;
Figure 2 illustrates resource allocation within a frame;
Figure 3 shows relationships between various channels defined in LTE;
Figure 4 illustrates principles employed in Co-operative Multipoint Processing (CoMP) as applied to cells;
Figure 5 shows a possible arrangement of CSI-RS reference signals employed in an embodiment of the present invention, for LTE Frame Structure 1 (FDD) and Frame Structure 2 (TDD);
Figure 6 shows multiple measurements on zero-power CSI-RS as performed in accordance with embodiments;
Figure 7 is a flow chart of a general invention embodiment;
Figure 8 is a schematic block diagram of a terminal for use in the present invention; and
Figure 9 is a schematic block diagram of a base station for use in the present invention.

### Detailed Description

If it were possible to obtain clean measurements of OGI, system performance with CoMP could be improved, for example in delivering higher data rates to users; maintaining data rates and reducing transmission power levels; and allowing more accurate scheduling decisions to be taken thus improving resource efficiency. Therefore, techniques for providing the LTE network with means to coordinate its transmissions in such a way as to allow the UE to obtain measurements of OGI, and to instruct the UE in the manner of doing so, are of significant interest.

As already mentioned, for the purpose of OGI measurement, it has hitherto been assumed that transmissions from the co-operating cells in a CoMP network are perfectly time-aligned (at least within the cyclic prefix duration of an OFDM system) so that appropriate muting of CSI-RS can allow a "clean" OGI measurement to be obtained. However, particularly in future versions of CoMP with non-ideal synchronization, and in the "Small Cell" scenario, this may not be the case.

For example, a time difference may arise between eNodeBs which co-operate over a backhaul link (such as broadband Internet in the case of HeNBs), owing to delay time in transmission over this link. This delay can prevent an eNodeB from knowing the precise starting/finishing timings of subframes transmitted from cells of other eNodeBs, leading to misalignments in timing which can persist for many frames. Although techniques are available for achieving synchronization between eNBs, even with imperfect backhaul links, these involve additional hardware and costs, which is undesirable especially in a heterogeneous network/SmallCell scenario employing low-cost femtocells and the like.

The lack of perfect synchronization among co-operating cells may be caused by non-ideal inter cell interfaces as well as latency in backhaul networks. Whilst more likely when the co-operating cells are provided by physically-distinct eNodeBs, timing differences might also arise where cells are provided by the same eNodeB. In the present release of LTE, there is no particular provision to accommodate such lack of synchronization while still providing accurate OGI measurement without being affected by the in-group transmission. The lack of synchronization would clearly make OGI measurement difficult.

Consequently, for co-operating cells with non-ideal time synchronization (e.g. with timing difference exceeding the duration of the cyclic prefix in an OFDM system) between the co-operating cells, OGI measurement will be corrupted by in-group transmissions even if the same muted CSI-RS patterns are configured for all the co-operating cells. This would make co-ordinated scheduling more difficult to implement effectively.

A co-pending application by the present applicant provides for an extended CSI-RS pattern which takes up at least one more RE than the CSI-RS pattern provided by current LTE specifications, and allows for clean OGI measurement, under the influence of multiple imperfect synchronized cooperating cells/eNBs. However, this extended pattern will take up this extra RE, which would otherwise be used for PDSCH transmission. Moreover, there may not be more than one cell/eNB that has timing difference and still have strong impact on the OGI measurement. The inventors have realised that an alternative approach is possible in such circumstances.

Having explained the issues in the related art, embodiments of the present invention will now be described.

The basic principle of the invention is to coordinate transmissions, or muting of transmissions, among some or all of the cells within a co-operating group of cells and possibly several eNodeBs in a cooperating group such that certain subsets of resource elements (REs) configured as muted (zero-power) CSI-RS for a given UE experience reduced or eliminated transmissions from within the CoMP group, and the scheme is made resistant to a certain degree of imperfect time synchronization between the cells and tolerant to a certain degree of timing difference between the serving cell and the interfering cells. For example, in typical embodiments the subframe timing would need to be aligned with an accuracy of only one OFDM symbol. The invention provides for using the muted CSI-RS configuration to provide tolerance to one cooperating cell, which is not perfectly aligned with the serving cell and may thus cause interference to the OGI measurement, without the need to configure one further PDSCH RE to be muted.

Coordination of time-domain and frequency domain DL transmissions is assumed for this purpose of OGI measurement. (Explicit coordination in the frequency domain might not be required, for example where all cells are using the same carrier frequency). A UE can then be configured by an eNodeB to make channel and/or OGI measurements in coordinated REs. These measurements are those necessary to allow the UE to formulate feedback to the network incorporating a recommendation for DL precoding to help mitigate the effects of OGI (or to allow the network to determine suitable such DL precoding itself). The embodiments are relevant in two main network scenarios: (i) all the cells belong to one eNodeB which is able to impose its coordination choices on its cells; and (ii) where multiple eNodeBs are co-operating and there must be some new messages exchanged (e.g. over the X2 interface) to reach a coordinated decision on which REs are to be made available for OGI measurements.

In general, unless otherwise indicated, the embodiments described below are based on LTE, where the network comprises one or more eNodeBs, each controlling one or more downlink cells, each downlink cell having a corresponding uplink cell. Each DL cell may serve one or more terminals (UEs) which may receive and decode signals transmitted in that serving cell. In order to control the use of transmission resources in time, frequency and spatial domains for transmission to and from the UEs, the eNodeB sends control channel messages (PDCCH) to the UEs. A PDCCH message typically indicates whether the data transmission will be in the uplink (using PUSCH) or downlink (using PDSCH), it also indicates the transmission resources, and other information such as transmission mode, number of antenna ports, data rate, number of codewords enabled. In addition PDCCH may indicate which reference signals may be used to derive phase reference(s) for demodulation of a DL transmission. Reference signals for different antenna ports, but occupying the same locations, are distinguished by different spreading codes.

The cells in a co-operating group may co-operate in the transmission of signals (such as PDSCH) to a UE. In the case of CoMP, one or more cells in the CoMP group may become serving cells for a given UE. Embodiments of the present invention are particularly, but not necessarily exclusively, relevant to coordinated scheduling in which one of the cells in the group is dynamically selected as the serving cell of the UE at a given time.

In order for the eNodeB (or group of eNodeBs) to schedule efficient transmissions to UEs with appropriate transmission parameters and resources, each UE provides feedback on the DL channel state for one cell, or a group of serving cells to the eNodeB(s) controlling the serving cell(s) for that UE. This feedback includes measurements of the CSI-RS, including measurements of the noise/interference power level on zero-power CSI-RS.

According to this invention, CSI-RS REs are muted as they are in the LTE Release 10 or 11 with any of the CSI-RS patterns which may be used for Frame Structure 1 (FDD) or Frame Structure 2 (TDD). In LTE this means it is possible to configure more than two CRS ports, since the additional CRS pattern will not collide with the additional muted REs required for OGI measurement in the technique proposed in the applicant's co-pending application.

In a first embodiment, in an LTE system, a coordinating eNodeB configures all the cells within the cooperating group to have a common muted CSI-RS pattern for a given UE or set of UEs served in the group. This co-ordinating eNodeB may be a "fixed" leader of the group, or may have a co-ordinating role only for that UE/set of UEs. In the case of a heterogeneous network where the group includes a macro cell, it may be appropriate for the macro cell eNodeB to take the co-ordinating role (since it may be assumed to have superior processing power and backhaul connectivity compared with the small cell eNodeBs). Some negotiation among the co-operating eNodeBs may be necessary in order to agree a common muted CSI-RS pattern.

In these group-specific muted CSI-RS patterns, the locations of which are signalled to the UEs, a UE can then make measurements of OGI by monitoring the REs corresponding to possible locations of PDSCH transmissions from cells outside the group. The UE(s) can assume that only noise and OGI are present in these REs.

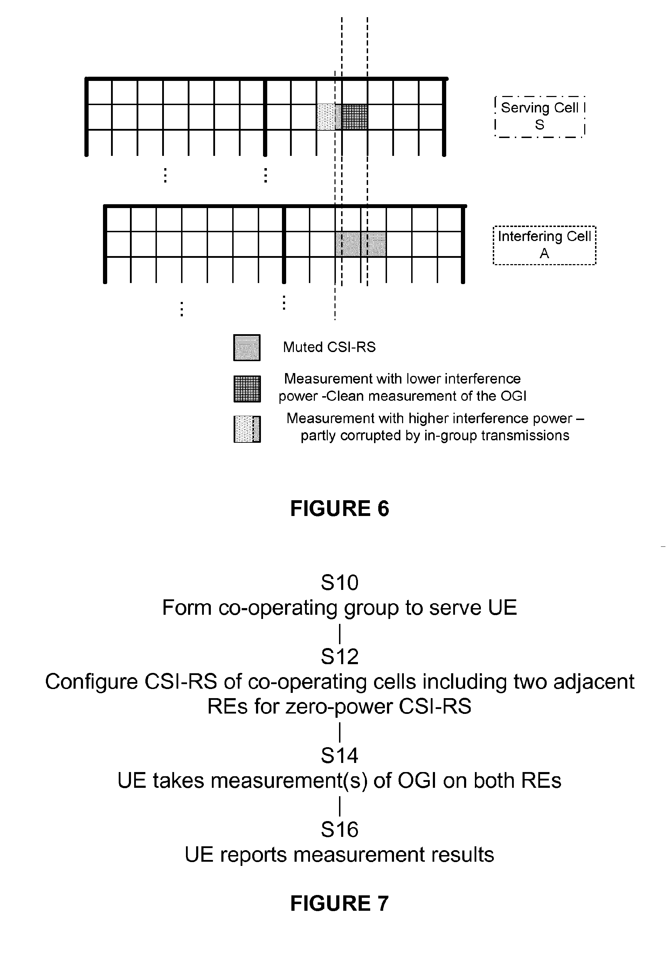

Figure 5 shows an example of a possible zero-power CSI-RS pattern for both LTE Frame Structure 1 (FDD) and Frame Structure 2 (TDD). The possible locations of other CSI-RS in the same OFDM symbols are also shown. The pattern defines the locations for the zero-power CSI-RS corresponding to a specific antenna port and cell index. In Figures 5 and 6, RBs are depicted in corresponding form to that shown in Figure 2, such that the small squares represent REs, the x-axis represents time (symbols) and the y-axis frequency (subcarriers). In a given system deployment, multiple RBs are defined across the operating bandwidth of the system (system bandwidth), each typically containing the same arrangement of signals assigned to REs.

According to existing LTE specifications, in this example, pairs of CSI-RS, each in the same row or subcarrier (in other words at the same frequency), are placed in the 10^{th} and 11^{th} columns (in other words in adjacent locations in the time domain), including zero-power CSI-RS on the 3^{rd} row. It should be noted that this is only one example: each antenna port has its own CSI-RS pattern, and each cell in the group may comprise a plurality of antenna ports. Thus, there is a CSI-RS pattern for each antenna port within a cell and for each cell in the group, the cells being identified by a cell index, which is an ID number assigned from a set of large enough that for practical purposes, it is a unique number within the group. Consequently, CSI-RS in locations other than those shown in Figure 5 would correspond to a different cell index and/or antenna port. Strictly speaking, however, the zero-power CSI-RS do not correspond to a specific antenna port since nothing is transmitted in them.

In order to provide tolerance to the intercell delay, individual measurement of OGI on the 2 CSI-RS REs is required as is explained below.

Under this configuration, a timing difference of maximum 1 OFDM symbol (width of a RE) can be tolerated among the cooperating cells may generate interference due to the time misalignment. The reason is explained in Figure 2, using the case of 1 cell as an example. The shadowed areas in Figure 5 are the proposed muted CSI-RS. The measurement can be carried out on both the 1^{st} and 2^{nd} RE of the two muted REs in Serving Cell "S" and out of the two results there will be one un-affected by transmission from the Cooperating Cells A, as long as the timing difference is not larger than one OFDM symbol.

In a second embodiment, the two OGI measurement results from the muted REs can be compared. In case the 2 results are very similar, this means the timing misalignment between the 2 cells is probably minimal and both the results should be clean OGI measurements. In case one result represents lower interference than the other, the lower one should be regarded as the OGI measurement without being affected by the in-group transmissions, and the difference between the two results could be used to estimate the timing difference between the serving cell and the co-operating cell. (Alternatively the higher measurement may simply be discarded). Incidentally, similar measurements may be made in multiple RBs across the system bandwidth, and multiple measurements may be averaged in order to increase the measurement accuracy (at the cost of reduction in frequency domain resolution).

If an estimate of the timing difference is obtained, this can be utilised if desired to take appropriate corrective action. For example a coordinating eNodeB within the group (such as a macro cell eNodeB) may instruct a small cell eNodeB to adjust its timing so as to become better synchronised with the rest of the group.

Figure 7 is a flowchart outlining steps taken in embodiments.

Firstly, a co-operating group of cells is formed with respect to one UE or a set of UEs (step S10). As already mentioned this group may employ coordinated scheduling in which only one cell serves the UE and the other cells co-ordinate their transmissions to avoid in-group interference. Such coordinated scheduling is tolerant of a degree of timing misalignment among the cells (unlike joint transmission for example).

Next (S12), it is necessary to configure CSI-RS for the group of cells and a specific UE, including one or more zero-power CSI-RS patterns in each of which there is an adjacent pair of REs for zero-power CSI-RS. As already mentioned this may be configured at the eNodeB level, for example at a macro cell eNodeB within the group. Where there is more than one co-operating eNodeB, this would require X2 interface exchange of the common group-wide CSI-RS pattern among all co-operating eNodeBs. Alternatively, a higher-level node in the network might take a role in this configuration. As mentioned earlier, and in accordance with previous proposals, the zero-power CSI-RS for a specific UE are arranged to be located on common REs for each cell in the co-operating group of cells for that UE, so as to permit measurement of OGI by the UE.

Then (S14) the UE takes measurements of OGI on both of the locations corresponding to the zero-power CSI-RS and any additional muted RE (step S14). That is, in both REs occupied by the zero-power CSI-RS, the UE takes a measurement of noise and/or interference, which although basically an OGI measurement may be corrupted by in-group transmissions due to timing misalignments, as already mentioned. Although not relevant to OGI, it should be noted that the UE also performs measurements on the other (non-zero) CSI-RS in the usual way, so as to feed back CQI to the network.

Finally, in step S16 the UE reports measurement results, in particular (for the purpose of the present invention) the OGI measurements. It either sends the results of each measurement to the network for analysis (typically, to the serving cell), or analyses the measurements in some way prior to sending a report. This step may be repeated every time the CSI-RS occur in a downlink subframe.

Knowledge of OGI helps the network (e.g., serving eNodeB) to schedule resources to the UE which are relatively unaffected by OGI.

In the above embodiments, interference measurements made on each of the zero-power CSI-RS could be used to derive different CSI reports, based on different interference levels. Alternatively, the interference measurements could be reported directly.

It is known that channel related measurements may be averaged in the frequency domain (or the time domain). Such averaging could be applied to the measurements made according to this invention, for example by the UE prior to sending a report to an eNodeB.

The invention is proposed to mitigate the effects of non-ideal time synchronization, by considering muted resource elements which are adjacent in the time domain, but a similar principle could also be applied in the frequency domain to mitigate the effects of non-ideal frequency alignment.

Implementation of the invention may involve modification of the system specifications. If the invention were to be included in 3GPP specifications for LTE it would probably be in the following form:
- RRC signalling to configure the interference measurements to be made. Such signalling could indicate one or more of options such as the following:
   ○ Measurements using the either of 2 REs
   ○ Measurements using both of the 2 REs
   ○ Selection of the lowest interference measurement from the two REs
   ○ A difference between measurements on each the REs

The invention could be applied directly as an extension to Transmission Mode 10, where one CSI process corresponds to a single set of CQI reports. Thus if one interference measurement is configured, this would correspond to one CSI process. If multiple interference measurements are configured this would correspond to multiple CSI processes.

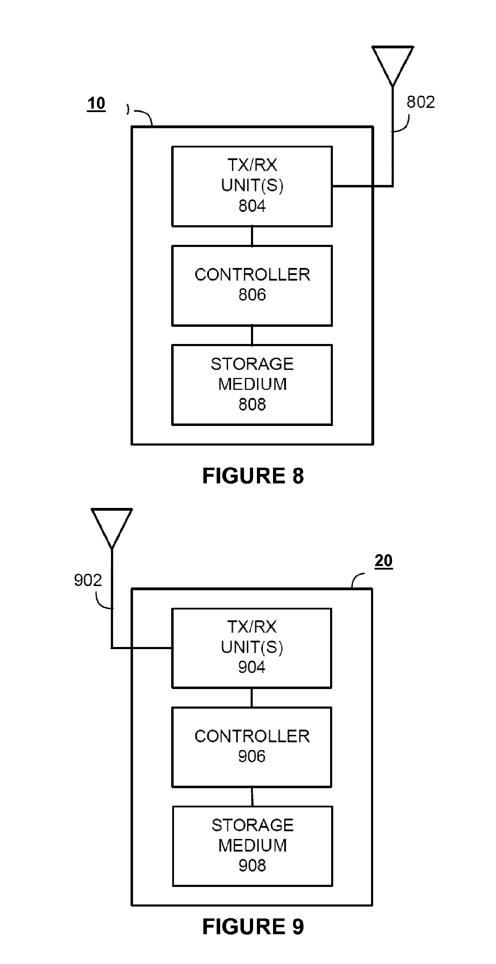

Figure 8 is a block diagram illustrating an example of a terminal 10 to which the present invention may be applied. The terminal 10 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The terminal 10 includes transmitter/receiver unit(s) 804 connected to at least one antenna 802 (together defining a communication unit) and a controller 806 having access to memory in the form of a storage medium 808. The controller may be, for example, microprocessor, digital signal processor (DSP), application-specific integrated circuit (ASIC), field programmable gate array (FPGA), or other logic circuitry programmed or otherwise configured to perform the various functions described above, such as taking interference measurements in each RE allocated to zero-power CSI-RS. For example, the various functions described above may be embodied in the form of a computer program stored in the storage medium 808 and executed by the controller 804. The controller 806 notes the configuration of CSI-RS provided to it by the network. The transmission/reception unit 804 is arranged, under control of the controller 806, to receive configuration messages, send measurement reports and so forth as discussed previously.

Figure 9 is a block diagram illustrating an example of a base station 20 to which the present invention may be applied. The base station includes transmitter/receiver unit(s) 904 connected to at least one antenna 902 (together defining a communication unit) and a controller 906. The controller may be, for example, microprocessor, DSP, ASIC, FPGA, or other logic circuitry programmed or otherwise configured to perform the various functions described above, such as changing an operating parameter of the base station 20. For example, the various functions described above may be embodied in the form of a computer program stored in the storage medium 908 and executed by the controller 906. Thus, for example the controller 906 is responsible for configuring the CSI-RS in co-operation with any other base stations in the co-operating group of cells, etc. The transmission/reception unit 904 is responsible for transmitting a configuration message for CSI-RS of the UE, normal PDSCH transmission including any zero-power REs, receiving measurement reports including CQI and OGI reports from the UE, and so on under control of the controller 906.

The embodiments may be combined as appropriate. Various modifications are possible within the scope of the present invention.

The embodiments described above are particularly applicable to pairs of muted CSI-RS which are in adjacent REs, and in the case of timing differences of up to one symbol. Another approach, such as that taken in the above mentioned co-pending application by the same applicant, may be taken when the timing differences are one symbol or greater.

For the purposes of explanation above, it has been assumed that a UE takes a measurement on a single RE. In terminals employed in a wireless communication system such as LTE, signal processing is typically FFT-based, which makes the basic unit of measurement a single RE (i.e. within one OFDM symbol). This is not essential, however, and the present invention is equally applicable if a UE is capable of finer measurement resolution in the time domain.

Thus, if the terminal is capable of doing so, it may take multiple interference measurements on the same RE thereby yielding more than two measurements in total, and possibly allowing a better estimation of the number, size and direction of time misalignments within the co-operating group of cells.

As already mentioned, the term "cells" in the above description is to be interpreted broadly. Cells need not each have a different geographical area, or a different base station. Cells, in general, can be defined on a downlink, uplink, or on both. For the purpose of embodiments, in the co-operating group of cells, the cells may be assumed to be at least downlink cells.

"Muting" of CSI-RS will normally involve avoiding any transmission in the RE concerned; however, this is not necessarily always essential. It may be sufficient for some of the cells within the group merely to reduce their transmission power at the RE locations of the muted CSI-RS to the point where OGI measurement is no longer affected by in-group interference. The term "muted" is thus to be interpreted broadly.

Moreover, reference has been made above to configuring all the cells within the co-operating group to have a common muted CSI-RS pattern. However, depending on the location and power of cells in relation to the UE for which the CSI-RS are being configured, it may not be essential for every cell in the co-operating group to mute its transmissions in the REs so configured, even in the broad sense just noted. Indeed, there may be good reasons why the network does not wish to mute all cells within the group.

To summarise, the invention provides an interference measurement technique in the LTE downlink based on coordinated CSI-RS (Channel State Information - Reference Symbol) patterns among multiple cells/eNBs operating in a coordinated group. This coordinated CSI-RS enables a UE to measure the interference arising from cells outside of the cooperating group (OGI). However, in scenarios of interest the time synchronization among the cells is likely to be non-perfect due to latency in the backhaul network, which makes the measurement of OGI likely to be corrupted by in-group transmission. According to embodiments, a terminal can be instructed to carry out individual measurements on two adjacent muted CSI-RS. Provided the maximum spread of timing misalignment among the imperfectly synchronized cells interfering with OGI measurement is no more than one OFDM symbol, a clean result of OGI can then be extracted from the two measurements.

### Industrial Applicability

This proposed measurement technique provides the UEs with the ability to obtain clean measurement of the OGI under the impact of one non-ideally time synchronized cell/eNB in a cooperating group, which would otherwise be disturbed by the misalignment. The proposed solution maximizes spectrum efficiency and system throughput by not requiring configuration of any additional muted data REs but only uses the muted CSI-RS pattern specified for the LTE. The obtained OGI measurement result, which is resistant to timing errors within the cooperating group, will benefit the cooperation by improving the accuracy of channel state feedback and hence increasing the system data rate, saving energy and enhancing user experience, as a result of properly mitigating impact of the OGI by scheduling transmission resources according to the measurement.

## Claims

1. A method for measuring out-of-group interference, OGI, in a wireless communications system providing a co-operating group of cells which coordinate their transmissions with respect to one or more terminals, transmissions in the system being scheduled in units of resource elements, REs, where each RE has a defined location in time and frequency, and in units of resource blocks, RBs, each containing multiple REs, the method comprising:
configuring a terminal with locations of a plurality of REs within the same RB that it should assume to have muted transmissions from at least one of the co-operating group of cells; and
configuring the said terminal to make at least one interference measurement on each of more than one adjacent REs among said plurality of REs.

2. The method according to claim 1 wherein REs which are to be muted contain zero transmission power from the at least one of the co-operating group of cells.

3. The method according to claim 1 or 2 wherein the terminal makes one measurement upon each of the more than one adjacent REs.

4. The method according to claim 1, 2 or 3, further comprising the terminal transmitting at least one report based on the interference measurements.

5. The method according to claim 4 wherein the report is indicative of results of each measurement.

6. The method according to claim 4 wherein the report is indicative of a result of analysis by the terminal of the interference measurements.

7. The method according to any preceding claim wherein the more than one adjacent REs are consecutive in time and located at the same frequency.

8. The method according to any of claims 1 to 6 wherein the more than one adjacent REs are located at adjacent frequencies and occur at the same time.

9. The method according to any preceding claim wherein the co-operating group of cells is arranged for co-ordinated scheduling with transmission to the terminal by one serving cell among the group.

10. The method according to any preceding claim, applied to a LTE-A wireless communication system, the more than one adjacent REs constituting muted CSI-RS for the terminal.

11. A wireless communication system comprising:
a terminal; and
one or more base stations providing a co-operating group of cells which coordinate their transmissions with respect to the terminal, transmissions in the system being scheduled in units of resource elements, REs, the REs having defined locations in time and frequency, and in units of resource blocks, RBs, each containing multiple REs; wherein
the one or more base stations and terminal are configured with locations of a plurality of REs within the same RB which are to have muted transmissions from at least one of the co-operating group of cells; and
the terminal is arranged to make at least one interference measurement on each of more than one adjacent REs among said plurality of REs.

12. A base station for use in a wireless communication system to provide one or more cells of a co-operating group of cells which coordinate their transmissions with respect to a terminal, transmissions in the system being scheduled in units of resource elements, REs, where the REs have defined locations in time and frequency, and in units of resource blocks, RBs, each containing multiple REs; wherein
the base station is configured with locations of a plurality of REs within the same RB which are to have muted transmissions from at least one of the co-operating group of cells; and
the base station is arranged to instruct the terminal to make at least one interference measurement on each of more than one adjacent REs among said plurality of REs.

13. A terminal for use in a wireless communication system comprising, in addition to the terminal, one or more base stations providing a co-operating group of cells which coordinate their transmissions with respect to the terminal, transmissions in the system being scheduled in units of resource elements, REs, where the REs have defined locations in time and frequency, and in units of resource blocks, RBs, each containing multiple REs; wherein
the terminal is configured with locations of a plurality of REs within the same RB which it should assume to have muted transmissions from at least one of the co-operating group of cells; and
the terminal is arranged to make at least one interference measurement on each of more than one adjacent REs among said plurality of REs.

14. Computer-readable code which, when executed by a processor of radio-transceiver-equipped information processing apparatus, provides the base station of claim 12, or the terminal of claim 13.

## Amended claims

### Amended claims in accordance with Rule 137(2) EPC.

**1.** A method for measuring out-of-group interference, OGI, in a wireless communications system providing a co-operating group of cells controlled by one or more base stations (20), which cells coordinate their transmissions with respect to one or more terminals (10), transmissions in the system being scheduled in units of resource elements, REs, where each RE has a defined location in time and frequency, and in units of resource blocks, RBs, each containing multiple REs, the method comprising:
at least one said base station (20) configuring a terminal (10) with locations of a plurality of REs within the same RB that it should assume to have muted transmissions from at least one of the co-operating group of cells; and
said terminal (10)making at least one interference measurement on each of more than one adjacent REs among said plurality of REs; **characterised by**
said terminal (10) comparing the interference measurements to obtain an OGI measurement result which is resistant to timing errors within the co-operating group of cells.

**2.** The method according to claim 1 wherein REs which are to be muted contain zero transmission power from the at least one of the co-operating group of cells.

**3.** The method according to claim 1 or 2 wherein the terminal (10) makes one measurement upon each of the more than one adjacent REs.

**4.** The method according to claim 1, 2 or 3, further comprising the terminal (10) transmitting at least one report based on the OGI measurement result.

**5.** The method according to claim 4 wherein the report is indicative of results of each measurement.

**6.** The method according to claim 4 wherein the report is indicative of a timing difference between said at least one of the co-operating group of cells and another one of the co-operating group of cells which causes interference due to timing error, the terminal (10) estimating the timing difference by comparing the interference measurements.

**7.** The method according to claim 6 further comprising at least one base station (20) adjusting its timing in response to the timing difference indicated in the report.

**8.** The method according to any preceding claim wherein the more than one adjacent REs are consecutive in time and located at the same frequency.

**9.** The method according to any preceding claim wherein the co-operating group of cells is arranged for co-ordinated scheduling with transmission to the terminal (10) by one serving cell among the group.

**10.** The method according to any preceding claim, applied to a LTE-A wireless communication system, the more than one adjacent REs constituting muted CSI-RS for the terminal (10).

**11.** A wireless communication system comprising:
a terminal (10); and
one or more base stations (20) controlling a co-operating group of cells which coordinate their transmissions with respect to the terminal (10), transmissions in the system being scheduled in units of resource elements, REs, the REs having defined locations in time and frequency, and in units of resource blocks, RBs, each containing multiple REs; wherein
the one or more base stations (20) and terminal (10) are configured with locations of a plurality of REs within the same RB in which transmissions are muted from at least one of the co-operating group of cells; and
the terminal (10) is arranged to make at least one interference measurement on each of more than one adjacent REs among said plurality of REs; **characterised in that**
the terminal (10) is further arranged to compare the interference measurements to obtain an OGI measurement result which is resistant to timing errors within the co-operating group of cells.

**12.** A base station (20) for use in a wireless communication system to control one or more cells of a co-operating group of cells which coordinate their transmissions with respect to a terminal (10), transmissions in the system being scheduled in units of resource elements, REs, where the REs have defined locations in time and frequency, and in units of resource blocks, RBs, each containing multiple REs; wherein
the base station (20) is configured with locations of a plurality of REs within the same RB which are to have muted transmissions from at least one of the co-operating group of cells; and
the base station (20) is arranged to instruct the terminal (10) to make at least one interference measurement on each of more than one adjacent REs among said plurality of REs; **characterised in that**:
the base station (20) is further arranged to instruct the terminal (10) to compare the interference measurements to obtain an OGI measurement result which is resistant to timing errors within the co-operating group of cells.

**13.** A terminal (10) for use in a wireless communication system comprising, in addition to the terminal, one or more base stations (20) controlling a co-operating group of cells which coordinate their transmissions with respect to the terminal (10), transmissions in the system being scheduled in units of resource elements, REs, where the REs have defined locations in time and frequency, and in units of resource blocks, RBs, each containing multiple REs; wherein
the terminal (10) is configured with locations of a plurality of REs within the same RB which it should assume to have muted transmissions from at least one of the co-operating group of cells; and
the terminal (10) is arranged to make at least one interference measurement on each of more than one adjacent REs among said plurality of REs; **characterised in that**
the terminal (10) is further arranged to compare the interference measurements to obtain an OGI measurement result which is resistant to timing errors within the co-operating group of cells.

**14.** Computer-readable code which, when executed by a processor of radio-transceiver-equipped information processing apparatus, provides the base station (20) of claim 12, or the terminal (10) of claim 13.
